(19) **Europäisches Patentamt / European Patent Office / Office européen des brevets**

(11) **EP 1 570 313 B1**

(12) **FASCICULE DE BREVET EUROPEEN**

(45) Date de publication et mention
de la délivrance du brevet:
**30.07.2008 Bulletin 2008/31**

(21) Numéro de dépôt: **03767899.2**

(22) Date de dépôt: **04.11.2003**

(51) Int Cl.:
*G02F 2/00* (2006.01)     *H01Q 3/26* (2006.01)

(86) Numéro de dépôt international:
**PCT/FR2003/003287**

(87) Numéro de publication internationale:
**WO 2004/042468 (21.05.2004 Gazette 2004/21)**

(54) **GENERATEUR D'UN SIGNAL ELECTRIQUE A MULTIPLES COMPOSANTES FREQUENTIELLES**

SIGNALGENERATOR DER EIN ELEKTRISCHES SIGNAL AUS MEHREREN
FREQUENZKOMPONENTEN ERZEUGT

GENERATOR OF A MULTIPLE FREQUENCY COMPONENT ELECTRIC SIGNAL

(84) Etats contractants désignés:
**AT BE BG CH CY CZ DE DK EE ES FI FR GB GR
HU IE IT LI LU MC NL PT RO SE SI SK TR**

(30) Priorité: **05.11.2002 FR 0213834**

(43) Date de publication de la demande:
**07.09.2005 Bulletin 2005/36**

(73) Titulaire: **Thales
92526 Neuilly Sur Seine (FR)**

(72) Inventeurs:
• **HUIGNARD, J.,
Thales Intellectual Property
F-94117 Arcueil Cedex (FR)**
• **TONDA-GOLDSTEIN, S.,
Thales Intellectual Property
F-94117 Arcueil Cedex (FR)**
• **DOLFI, Daniel,
Thales Intellectual Property
F-94117 Arcueil cedex (FR)**
• **MONSTERLEET, Aymeric,
Thales Intellectual Property
F-94117 Arcueil Cedex (FR)**
• **SAPE, Philippe,
Thales Intellectual Property
F-94117 Cedex (FR)**
• **CHAZELAS, Jean,
Thales Intellectual Property
F-94117 Arceuil Cedex (FR)**

(74) Mandataire: **Esselin, Sophie et al
Marks & Clerk France
31-33 Avenue Aristide Briand
94117 Arcueil Cedex (FR)**

(56) Documents cités:
**US-A- 5 187 487          US-A- 5 274 381**

• **TONDA-GOLDSTEIN S ET AL:
"OPTOELECTRONIC ARBITRARY-WAVEFORM
GENERATOR FOR RADAR APPLICATIONS"
PROCEEDINGS OF THE SPIE, SPIE,
BELLINGHAM, VA, US, vol. 4457, 31 juillet 2001
(2001-07-31), pages 179-187, XP009013303 ISSN:
0277-786X**
• **TONDA-GOLDSTEIN S ET AL:
"OPTOELECTRONIC ARBITRARY-WAVEFORM
GENERATOR FOR RADAR APPLICATIONS"
OPTICAL ENGINEERING, SOC. OF PHOTO-
OPTICAL INSTRUMENTATION ENGINEERS.
BELLINGHAM, US, vol. 39, no. 12, décembre 2000
(2000-12), pages 3294-3300, XP009013312 ISSN:
0091-3286**

**Description**

La présente invention concerne un générateur d'un signal électrique à multiples composantes fréquentielles, selon des lois de phase et d'amplitude déterminées. Elle est applicable à la génération de signaux électriques de formes d'onde arbitraire et permet notamment, dans le domaine des applications radar, la simulation de cibles ou la reconnaissance par corrélation des formes d'onde.

Les méthodes actuelles de génération de formes d'onde radar sont fondées sur des techniques numériques classiques, qui consistent à échantillonner et traiter le signal de façon à générer la forme d'onde souhaitée. Cependant, compte tenu de la complexité de la forme d'onde émise par les radars, ainsi que de la dynamique nécessaire, ces techniques demandent un nombre de points d'échantillonnage trop élevé pour les calculateurs actuels ; pour une impulsion de longueur typique 1 à 10 microsecondes et contenant un signal hyperfréquence autour de 10GHZ, plus de $2.10^5$ points d'échantillonnage, chacun codé sur 10 à 12 bits, sont nécessaires, soit un débit d'environ un térabit par seconde. Or, les technologies numériques actuelles ne permettent pas de tels débits.

La demande de brevet FR 2 772 938 au nom de la déposante a décrit la réalisation d'un générateur de signal électrique basé sur l'utilisation de composants optoélectroniques (lasers, modulateurs, photodiodes). La déposante a montré comment ces composants, qui permettent la transmission jusqu'à 40 GHz de signaux de grande dynamique (30 à 40 dB), peuvent être utilisés pour la réalisation de formes d'onde arbitraires. Cependant, le générateur décrit s'applique à la génération d'un signal électrique mono fréquence.

TONDA-GOLDSTEIN S ET AL: "OPTOELECTRONIC ARBITRARY-WAVEFORM GENERATOR FOR RADAR APPLICATIONS" PROCEEDINGS OF THE SPIE, SPIE, BELLINGHAM, VA, US (vol. 4457, 31 juillet 2001 pages 179-187) décrit un générateur optoélectronique pour la génération d'un signal électrique à multiples composants fréquentielles. Le dispositif a un générateur d'un premier faisceau optique bifréquence avec une première composante optique et une seconde composante optique présentant un décalage en fréquence. Le dispositif comprend aussi un modulateur optoélectronique de phase et d'amplitude. Le modulateur est destiné à recevoir sur chaque canal un faisceau optique bifréquence et permettant le contrôle des l'amplitude et du déphasage relatif entre les composantes de chacun de faisceaux. En addition, il y a un photodétecteur qui reçoit l'ensemble des faisceaux issus du dispositif modulateur multicanal.

La présente invention décrit un générateur de signal électrique à composantes fréquentielles multiples permettant d'accomplir de telles fonctions.

Plus précisément, l'invention propose un générateur d'un signal électrique (s(t)) à multiples composantes fréquentielles $f_k$, de fréquence centrale $f_0$ donnée, comprenant

- un générateur d'un premier faisceau optique bifréquence ($F_0$) avec une première composante optique ($F_{1,0}$) de pulsation $\omega$ et une seconde composante optique ($F_{2,0}$) de pulsation $\omega+2\pi f_0$ présentant un décalage en fréquence avec la première composante égal à ladite fréquence centrale $f_0$,
- un modulateur optoélectronique de phase et d'amplitude, multicanal, destiné à recevoir sur chaque canal un faisceau optique bifréquence ($F_k$) et permettant le contrôle de l'amplitude et du déphasage relatif entre les composantes ($F_{1,k}$, $F_{2,k}$) de chacun des faisceaux,
- un photodétecteur recevant l'ensemble des faisceaux issus du dispositif modulateur multicanal,

**caractérisé en ce qu'**il comprend en outre un dispositif de génération à partir du premier faisceau optique bifréquence ($F_0$) de N faisceaux bifréquence ($F_k$), N>1, présentant chacun deux composantes ($F_{1,k}$, $F_{2,k}$) avec un décalage en fréquence $f_k$ égal à une composante fréquentielle du signal à générer, lesdits N faisceaux étant envoyés vers des canaux indépendants du dispositif modulateur multicanal, l'amplitude et le déphasage relatif entre les composantes ($F_{1,k}$, $F_{2,k}$) de chacun des faisceaux étant contrôlés en fonction des lois de phase et d'amplitude du signal (s(t)) à générer.

D'autres avantages et caractéristiques apparaîtront plus clairement à la lecture de la description qui suit, illustrée par les figures annexées qui représentent :

- la figure 1, le schéma d'un générateur d'un signal électrique selon une variante de réalisation de l'invention ;
- la figure 2, un premier exemple de réalisation d'un dispositif de génération des N faisceaux bifréquence du générateur selon l'invention ;
- les figures 3A et 3B, respectivement un second exemple de réalisation du dispositif de génération des N faisceaux bifréquence à base d'un cristal électro-optique et le diagramme présentant l'allure de la tension appliquée en fonction du temps ;
- la figure 4, le dispositif décrit figure 3A montrant le positionnement des électrodes sur le cristal électro-optique ;
- la figure 5, un troisième exemple de réalisation du dispositif de génération des N faisceaux bifréquence permettant de générer un grand nombre de faisceaux parallèles.

Sur ces figures, les éléments homologues sont repérés par des références identiques.

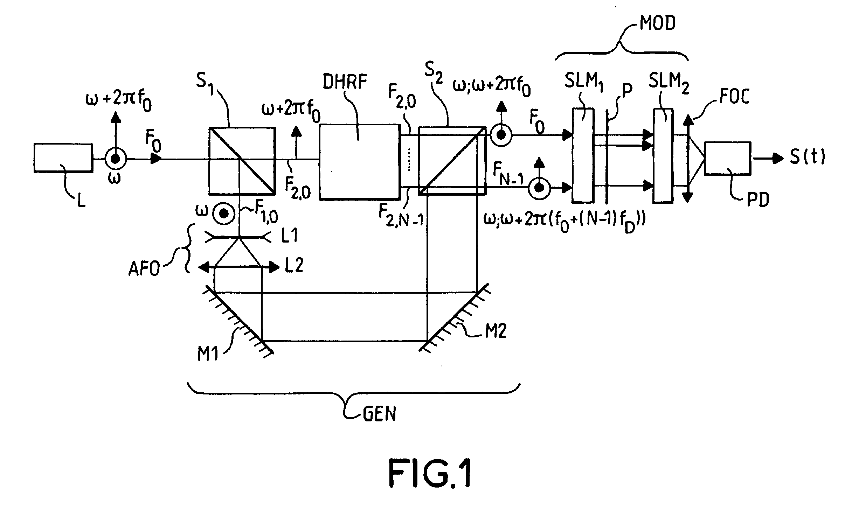

En se reportant à la figure 1, on décrit le schéma d'un générateur d'un signal électrique s(t) selon une variante de réalisation de l'invention. Le signal électrique s(t) que l'on veut générer présente une fréquence centrale $f_0$, typiquement 10 GHz, et des composantes fréquentielles $f_k$ qui sont par exemple des fréquences décalées de la fréquence centrale $f_0$ d'un pas $f_D$. Le contenu spectral du signal électrique que l'on veut générer comprend alors 2N-1 composantes fréquentielles $f_k$ (N>1) avec $f_k = f_0 \pm kf_D$ où k est un entier compris entre 0 et N-1. On cherche à générer un signal avec la meilleure résolution fréquentielle possible. Typiquement, la fréquence $f_D$ est une basse fréquence de l'ordre du kiloherz.

Selon l'invention, et l'en se référant à la figure 1, le générateur de signal électrique s(t) comprend :

- un générateur L d'un premier faisceau optique bifréquence $F_0$ de pulsations $\omega$ et $\omega+2\pi f_0$,
- un dispositif GEN de génération à partir du premier faisceau bifréquence $F_0$ de N faisceaux bifréquence $F_k$ de pulsations $\omega$ et $\omega+2\pi f_k$ où $f_k$ est une composante fréquentielle du signal à générer, par exemple $f_k = f_0 + kf_D$,
- un dispositif modulateur de phase et d'amplitude multicanal MOD sur lequel sont envoyés les N faisceaux bifréquence issus du dispositif de génération GEN et permettant le contrôle de l'amplitude et du déphasage relatif entre les composantes de chacun des faisceaux bifréquences, en fonction des lois de phase et d'amplitude du signal électrique à générer,
- un photodétecteur PD recevant l'ensemble des faisceaux issus du dispositif modulateur multicanal et délivrant le signal électrique s(t).

Selon l'exemple particulier de la figure 1, le générateur du premier faisceau bifréquence $F_0$ est par exemple une source laser bi-fréquence de pulsation ($\omega$ ;$\omega+2\pi f_0$) où le décalage fréquentiel est la fréquence centrale $f_0$ du signal électrique. Une telle source est décrite dans l'article de M.Alouini et al.("Offset Phase Locking of Er:Yb:Glass Laser Eigenstates for RF Photonics Applications", IEEE Photonics Technology letters, vol. 13, n°. 4, april 2001). Le décalage fréquentiel peut également être obtenu au moyen d'un laser émettant un faisceau optique de pulsation $\omega$ et d'un dispositif de translation de fréquence, qui, commandé par un signal électrique de fréquence $f_0$, permet de décaler en fréquence un signal optique d'entrée ; cette configuration est décrite dans la demande de brevet au nom de la déposante citée ci-dessus. Ces sources permettent de générer un faisceau bifréquence bipolarisé, c'est à dire dont les deux composantes ont des polarisations croisées. Comme on le verra par la suite, cela présente l'avantage de pouvoir séparer facilement les composantes et d'avoir des trajets optiques similaires pour les deux composantes. Cependant, il est également possible d'envisager pour le générateur du faisceau bifréquence $F_0$ une alternative consistant par exemple à la mise en oeuvre de deux lasers séparés bloqués en fréquence.

La figure 1 décrit un premier mode de réalisation du dispositif GEN de génération des N faisceaux bifréquence $F_k$. Il comprend des moyens optiques de séparation $S_1$ des deux composantes du faisceau bifréquence $F_0$ de pulsations $\omega$ et $\omega+2\pi f_0$, notées respectivement $F_{1,0}$ et $F_{2,0}$. Il comprend également un module de génération DHRF, à partir d'un faisceau d'entrée correspondant à la seconde composante $F_{2,0}$ de pulsation $\omega+2\pi f_0$, de N faisceaux optiques parallèles $F_{2,k}$ de pulsations $\omega+2\pi(f_0+kf_D)$, où k est un nombre entier entre 0 et N-1 et $f_D$ la basse fréquence donnée, ainsi que des moyens de combinaison de la première composante de pulsation $\omega$ avec les N faisceaux de pulsations $\omega+2\pi(f_0+kf_D)$ pour délivrer N faisceaux bifréquence $F_k$ parallèles. Un exemple de module DHRF est décrit par la suite.

Dans cet exemple, les composantes $F_{1,0}$ et $F_{2,0}$ présentent des polarisations croisées, leur séparation peut être obtenue par un dispositif séparateur de polarisation $S_1$ délivrant ainsi deux faisceaux monofréquence et monopolarisation. De la même façon, la combinaison des faisceaux peut être obtenu par un dispositif $S_2$ similaire. Un système optique afocal AFO sur la voie de la composante $F_{1,0}$ comportant par exemple deux lentilles $L_1$, $L_2$ permet d'étendre spatialement le faisceau optique de pulsation $\omega$ en vue d'être recombiné avec l'ensemble des faisceaux optiques $F_{2,k}$ générés par le module de génération DHRF.

Selon l'exemple de la figure 1, le modulateur optoélectronique multicanal MOD comprend un premier modulateur spatial $SLM_1$ fonctionnant en biréfringence contrôlée électriquement, recevant sur des canaux indépendants les faisceaux bifréquence $F_k$ afin de contrôler le déphasage relatif entre les composantes de chacun des faisceaux, un polariseur P orientant les polarisations des deux composantes de polarisations croisées et un second modulateur spatial d'amplitude $SLM_2$ recevant sur des canaux indépendants les faisceaux bifréquences bipolarisés afin de contrôler l'amplitude de chacun desdits faisceaux. Les modulateurs $SLM_1$ et $SLM_2$ comprennent un nombre de pixels qui doit être supérieur au nombre de faisceaux bifréquences générés par le dispositif de génération GEN. Ce mode de réalisation qui nécessite des faisceaux bifréquence dont les composantes ont des polarisations croisées, présente l'avantage d'avoir les mêmes trajets optiques pour les différentes composantes et de maîtriser ainsi l'encombrement du générateur de signal électrique. Par ailleurs, les modulateurs spatiaux de lumière issus de la technologie des écrans à cristaux liquides présentent des résolutions importantes, typiquement de l'ordre de 600x600 pixels, et constituent donc des composants extrêmement intéressants pour cette application. Cependant des fonctions équivalentes pourraient être obtenues avec d'autres moyens, par exemple en générant des retards optiques entre les différentes composantes des faisceaux bifréquence par contrôle des chemins optiques traversés par les deux composantes. Dans ce cas, il n'est pas nécessaire que les faisceaux bifréquences soient bipolarisés.

Par exemple, le modulateur $SLM_1$ est une cellule à cristal liquide nématique fonctionnant en biréfringence contrôlée électriquement (alignement parallèle des molécules). Ainsi, le modulateur $SLM_1$ permet de définir par exemple p x p canaux indépendants, sur lesquels il est possible de contrôler les déphasages relatifs $\phi_k(V_k)$ entre les N composantes $(\omega;\omega+2\pi(f_0+kf_D))$, k=0 à N-1. Le modulateur spatial $SLM_2$, par exemple de p x p pixels, est par exemple une cellule à cristal liquide nématique en hélice fonctionnant en tant que modulateur d'amplitude. Il permet ainsi de contrôler indépendamment sur chacun des canaux définis par les p x p pixels la puissance optique transmise. La transmission de chaque pixel vaut dans ce cas $a_k$, avec $a_k$ inférieur à 1.

L'ensemble des faisceaux bifréquence, issus du modulateur optoélectronique multicanal MOD sont ensuite envoyés sur le photodétecteur PD, par exemple au moyen d'une lentille de focalisation FOC. Le photodétecteur PD est par exemple une photodiode rapide dont la bande passante contient $f_0$.

A la sortie du modulateur multicanal MOD, l'expression de la partie modulée du signal sur le canal *i* est de la forme :

$$s_i(t) = \frac{1}{2}\sum_{k=0}^{+\infty} a_{k,i} E_k \left[\cos(2\pi f_{k,i} t + \phi_{k,i}) + \cos(2\pi f_{-k,i} t + \phi_{-k,i})\right]$$

Les coefficients d'amplitude $a_{k,i}$ et les phases $\Phi_{k,i}$ et $\Phi_{-k,i}$ sont contrôlés dans l'exemple de la figure 1, respectivement par les modulateurs $SLM_1$, $SLM_2$. Les coefficients $E_k$ sont les coefficients de Fourier, par exemple de l'impulsion radar de fréquence de répétition PRF (abréviation de l'expression anglosaxonne « Pulse Repetition Frequency ») contenant le signal à la fréquence $f_0$. Dans ce cas la basse fréquence $f_D$ est la fréquence PRF. Le contrôle des paramètres d'amplitude et de phase permet de former un signal $s_i(t)$ arbitraire. En développant l'expression précédente du signal $s_i(t)$, on obtient une forme du signal dans laquelle il est possible pour des atténuations $a_{k,i}$ et des phases $\Phi_{k,i}$ et $\Phi_{-k,i}$ quelconques de calculer le signal à générer, et de créer ainsi une forme d'onde arbitraire.

$$s_i(t) = \frac{1}{2}\cos(2\pi f_0 t)\left[\sum_{k=0}^{+\infty} E_k a_{k,i}\cos(2\pi k \cdot t \cdot PRF) \times (\cos\phi_{k,i} + \cos\phi_{-k,i})\right]$$

$$-\frac{1}{2}\cos(2\pi f_0 t)\left[\sum_{k=0}^{+\infty} E_k a_{k,i}\sin(2\pi k \cdot t \cdot PRF) \times (\sin\phi_{k,i} + \sin\phi_{-k,i})\right]$$

$$+\frac{1}{2}\sin(2\pi f_0 t)\left[\sum_{k=0}^{+\infty} E_k a_{k,i}\sin(2\pi k \cdot t \cdot PRF) \times (\cos\phi_{-k,i} - \cos\phi_{k,i})\right]$$

$$+\frac{1}{2}\sin(2\pi f_0 t)\left[\sum_{k=0}^{+\infty} E_k a_{k,i}\cos(2\pi k \cdot t \cdot PRF) \times (\sin\phi_{-k,i} - \sin\phi_{k,i})\right]$$

Les modulateurs $SLM_1$ et $SLM_2$ sont reconfigurables à chaque instant, ce qui permet d'avoir un système reconfigurable en amplitude et en phase. L'emploi de ces modulateurs permet de contrôler de façon parallèle un grand nombre, et sur une grande dynamique, d'amplitudes et de phases des signaux électriques. La fréquence $f_0$ peut également être modifiée, ce qui fournit une souplesse d'utilisation au système.

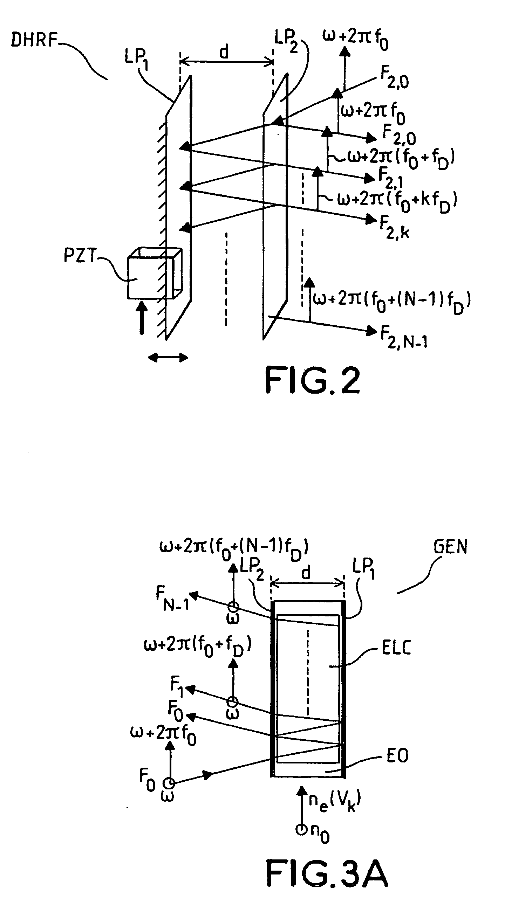

Un exemple de réalisation du module de génération DHRF des N faisceaux optiques parallèles $F_{2,k}$ de pulsations $\omega+2\pi(f_0+kf_D)$ est représenté sur la figure 2. Il comprend deux lames parallèles $LP_0$, $LP_2$ séparées d'une distance d donnée, une première lame $LP_1$ totalement réfléchissante et une seconde lame $LP_2$ semi réfléchissante, entre lesquelles le faisceau d'entrée $F_{2,0}$ subit des réflexions multiples, et des moyens de mise en mouvement de vibration de la première lame $LP_1$ à une fréquence de vibration qui va permettre d'engendrer un décalage Doppler égal à la basse fréquence $f_D$ sur les fréquences des faisceaux réfléchis par la lame $LP_1$, afin de générer à travers la seconde lame semi-réfléchissante $LP_2$ les N faisceaux parallèles $F_{2,k}$ de pulsations $\omega+2\pi(f_0+kf_D)$. Ainsi la lame $LP_2$ transmet une fraction du faisceau à chaque réflexion et un ensemble de N faisceaux parallèles est issu de la lame semi-réfléchissante. Les moyens de mise en mouvement de vibration comprennent par exemple une cale piézoélectrique PZT fixée par exemple par collage sur la première lame $LP_1$. Ce module DHRF est donc capable de délivrer N faisceaux optiques parallèles chacun décalé en fréquence d'un multiple entier k (k=0 à N) de la fréquence $f_D$ de la gamme du kiloHertz et constitue ainsi un module de génération de faisceaux à haute résolution fréquentielle extrêmement intéressant pour la mise en oeuvre du générateur selon l'invention.

Selon une variante, N lentilles collimatrices (non représentées sur la figure 1) peuvent être déposées en surface à la sortie de la lame semi-réfléchissante $LP_2$ de façon à donner N faisceaux parallèles collimatés en sortie.

La figure 3A représente une variante de réalisation du dispositif de génération des N faisceaux bifréquence $F_k$.

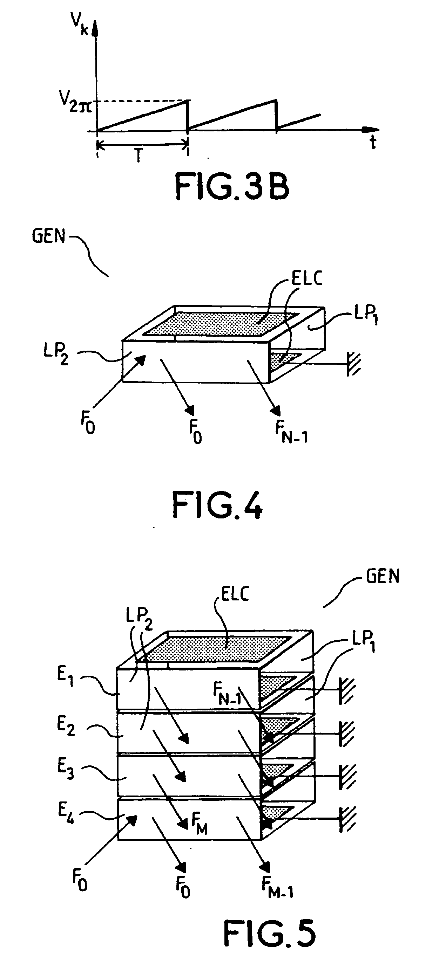

Selon cette variante, le dispositif GEN reçoit le faisceau $F_0$. Il est bifréquence et bipolarisé. Il est conçu pour ne générer la haute résolution fréquentielle que sur le faisceau portant une des deux directions de polarisation au moyen d'un matériau électro-optique EO contenu entre deux lames $LP_1$,$LP_2$ toutes les deux fixes. Ce matériau électro-optique est par exemple un cristal de $LiNbO_3$. Par application d'un champ électrique entre les deux lames au moyen d'électrodes ELC positionnées sur les faces du cristal latérales par rapport aux faces supportant les lames $LP_1$ et $LP_2$, l'indice de réfraction du cristal est modifié suivant une des polarisations, ce qui engendre un déphasage du signal optique sur la longueur d'interaction du cristal. L'indice de réfraction vu par $\omega$ est constant et égal à l'indice ordinaire $n_0$, alors que celui vu par $\omega+2\pi f_0$ dépend de la tension $V_k$ appliquée par l'intermédiaire de l'électrode ELC et vaut $n(V_k)$. La fréquence $f_D$ est générée en faisant varier l'indice $n(V_k)$ au cours du temps. La figure 3B représente la fonction $V_k$ fonction du temps dans cet exemple. $V_{2\Pi}$ est la tension permettant d'introduire une différence de marche de $2\Pi$ entre les composantes $F_{1,k}$ et $F_{2,k}$. Il s'agit de la différence de marche introduite sur le faisceau $F_{2,k}$ pendant une période de temps T correspondant au temps de propagation aller retour du faisceau dans le matériau électro-optique. Cette variante permet de s'affranchir des deux systèmes optiques de séparation $S_1$ et de combinaison $S_2$ des polarisations, ainsi que de la cale piézoélectrique faisant vibrer la lame $LP_1$. Dans cette variante, le dispositif DHRF est un composant compact.

La figure 4 montre le dispositif décrit sur la figure 3A selon une autre vue. Le dispositif GEN comprend l'élément formé du matériau électro-optique compris entre deux lames $LP_1$, $LP_2$ fixes, parallèles, la première lame réfléchissante $LP_1$ et la seconde lame semi-réfléchissante $LP_2$ entre lesquelles le faisceau bifréquence bipolarisé $F_0$ subit des réflexions multiples, les faisceaux $F_k$ émergeant de la lame semi-réfléchissante $LP_2$. Il comprend en outre des moyens d'application d'un champ électrique entre les deux lames, ici les électrodes ELC positionnées sur deux faces opposées du cristal latérales par rapport aux faces supportant les lames $LP_1$ et $LP_2$.

La figure 5 montre une variante de réalisation du dispositif de génération de faisceaux bifréquence $F_k$.

Selon cette variante, le dispositif GEN comprend un empilement d'éléments formés chacun d'un matériau électro-optique et de deux lames $LP_1$ (réfléchissante), $LP_2$ (semi-réfléchissante), chacun des éléments étant alimenté électriquement de façon indépendante aux moyen d'électrodes ELC afin de produire des multiples continus de la fréquence basse $f_D$.

Ainsi dans cette variante, le dispositif de génération de faisceaux bifréquence permet la réalisation d'un très grand nombre de canaux, en ceci qu'il comporte M cristaux électro-optiques empilés les uns sur les autres, chacun alimenté électriquement de façon indépendante pour pouvoir produire des multiples continus de la fréquence $f_D$.

## Revendications

1. Générateur d'un signal électrique (s(t)) à multiples composantes fréquentielles $f_k$, de fréquence centrale $f_0$ donnée, comprenant

   - un générateur (L) d'un premier faisceau optique bifréquence ($F_0$) avec une première composante optique ($F_{1,0}$) de pulsation $\omega$ et une seconde composante optique ($F_{2,0}$) de pulsation $\omega+2\pi f_0$ présentant un décalage en fréquence avec la première composante égal à ladite fréquence centrale $f_0$,
   - un modulateur optoélectronique (MOD) de phase et d'amplitude, multicanal, destiné à recevoir sur chaque canal un faisceau optique bifréquence ($F_k$) et permettant le contrôle de l'amplitude et du déphasage relatif entre les composantes ($F_{1,k}$, $F_{2,k}$) de chacun des faisceaux,
   - un photodétecteur (PD) recevant l'ensemble des faisceaux issus du dispositif modulateur multicanal (MOD),

   **caractérisé en ce qu'**il comprend en outre un dispositif de génération (GEN) à partir du premier faisceau optique bifréquence ($F_0$) de N faisceaux bifréquence ($F_k$), N>1, présentant chacun deux composantes ($F_{1,k}$, $F_{2,k}$) avec un décalage en fréquence $f_k$ égal à une composante fréquentielle du signal à générer, lesdits N faisceaux étant envoyés vers des canaux indépendants du dispositif modulateur multicanal, l'amplitude et le déphasage relatif entre les composantes ($F_{1,k}$, $F_{2,k}$) de chacun des faisceaux étant contrôlés en fonction des lois de phase et d'amplitude du signal (s(t)) à générer.

2. Générateur selon la revendication 1, **caractérisé en ce que** ledit décalage en fréquence $f_k$ est un multiple d'une basse fréquence $f_D$ donnée.

3. Générateur selon la revendication 2, **caractérisé en ce que** ladite basse fréquence $f_D$ est de l'ordre du kilohertz.

**4.** Générateur selon l'une des revendication 2 ou 3, **caractérisé en ce que** le dispositif (GEN) de génération des N faisceaux bifréquence comprend

- des moyens de séparation ($S_1$) des deux composantes ($F_{1,0}$, $F_{2,0}$) du premier faisceau bifréquence ($F_0$),
- un module de génération (DHRF), à partir d'un faisceau d'entrée correspondant à ladite seconde composante ($F_{2,0}$) de pulsation $\omega+2\pi f_0$, de N faisceaux optiques parallèles ($F_{2,k}$) de pulsations $\omega+2\pi(f_0+kf_D)$, où k est un nombre entier entre 0 et N-1 et $f_D$ une basse fréquence donnée,
- des moyens de combinaison ($S_2$) de la première composante ($F_{1,0}$) de pulsation $\omega$ avec lesdits N faisceaux ($F_{2,k}$) de pulsations $\omega+2\pi(f_0+kf_D)$ pour délivrer lesdits N faisceaux bifréquence.

**5.** Générateur selon la revendication 4, **caractérisé en ce** ledit dispositif de génération (DHRF) comprend deux lames parallèles ($LP_1$, $LP_2$) séparées d'une distance (d) donnée, une première lame ($LP_1$) totalement réfléchissante et une seconde lame ($LP_2$) semi réfléchissante, entre lesquelles ledit faisceau d'entrée ($F_{2,0}$) subit des réflexions multiples, et des moyens de mise en mouvement de vibration de ladite première lame ($LP_1$) à une fréquence de vibration permettant d'engendrer un décalage Doppler égal à ladite basse fréquence $f_D$, afin de générer à travers la seconde lame semi-réfléchissante ($LP_2$) lesdits N faisceaux parallèles de pulsations $\omega+2\pi(f_0+kf_D)$.

**6.** Générateur selon la revendication 5, **caractérisé en ce que** les moyens de mise en mouvement de vibration comprennent une cale piézoélectrique (PZT) fixée sur ladite première lame ($LP_1$).

**7.** Générateur selon l'une des revendications 4 à 6, **caractérisé en ce que** le premier faisceau optique bifréquence ($F_0$) étant bipolarisé, les deux composantes ($F_{1,0}$, $F_{2,0}$) de polarisations croisées, les moyens de séparation ($S_1$) et de combinaison ($S_2$) sont formés de dispositifs séparateurs de polarisation.

**8.** Générateur selon l'une des revendications 2 ou 3, **caractérisé en ce que** le premier faisceau optique bifréquence ($F_0$) étant bipolarisé, les deux composantes de polarisations croisées, le dispositif de génération des N faisceaux bifréquence comprend un élément formé d'un matériau électro-optique (EO) compris entre deux lames ($LP_1$, $LP_2$) fixes, parallèles, espacées d'une distance donnée (d), une première lame réfléchissante ($LP_1$) et une seconde lame semi-réfléchissante ($LP_2$) entre lesquelles ledit faisceau bifréquence bipolarisé subit des réflexions multiples et des moyens d'application (ELC) d'un champ électrique entre les deux lames, le matériau électro-optique étant agencé pour permettre d'introduire à chaque réflexion un déphasage sur la seule composante ($F_{2,0}$) de pulsation $\omega+2\pi f_0$, afin de générer à travers la seconde lame semi-réfléchissante ($LP_2$) lesdits N faisceaux bifréquence (Fk).

**9.** Générateur selon la revendication 8, **caractérisé en ce que** ledit matériau électro-optique est un cristal de Niobate de Lithium dont les axes sont orientés de telle sorte que l'indice de réfraction du cristal n'est modifié que selon la direction correspondant à la polarisation de ladite composante ($F_{2,0}$) de pulsation $\omega+2\pi f_0$.

**10.** Générateur selon l'une des revendications 8 ou 9, **caractérisé en ce que** le dispositif (GEN) de génération des N faisceaux bifréquence (Fk) comprend un empilement d'éléments ($E_1$, $E_2$, $E_3$, $E_4$) formés chacun d'un matériau électro-optique (EO) et de deux lames ($LP_1$, $LP_2$), chacun des éléments étant alimenté électriquement de façon indépendante afin de produire des multiples continus de ladite fréquence basse $f_D$.

**11.** Générateur selon l'une des revendications précédentes, **caractérisé en ce que** lesdits N faisceaux bifréquence étant bipolarisés, de polarisations linéaires croisées, le modulateur optoélectronique multicanal (MOD) comprend un premier modulateur spatial ($SLM_1$) fonctionnant en biréfringence contrôlée électriquement, recevant sur des canaux indépendants lesdits faisceaux bifréquence ($F_k$) afin de contrôler le déphasage relatif entre les composantes de chacun desdits faisceaux, un polariseur (P) orientant les polarisations des deux composantes et un second modulateur spatial d'amplitude ($SLM_2$) recevant sur des canaux indépendants les faisceaux bifréquences polarisés afin de contrôler l'amplitude de chacun desdits faisceaux.

**Claims**

**1.** Generator for generating an electrical signal (s(t)) having multiple frequency components $f_k$, with a given central frequency $f_0$, comprising:

- a generator (L) of a first dual-frequency optical beam ($F_0$) with a first optical component ($F_{1,0}$) of angular frequency $\omega$ and a second optical component ($F_{2,0}$) of angular frequency $\omega+2\pi f_0$ having a frequency shift with respect to the first component equal to said central frequency $f_0$;

- a multichannel optoelectronic phase/amplitude modulator (MOD) designed to receive, on each channel, a dual-frequency optical beam ($F_k$) and allowing the amplitude and the relative phase shift between the components ($F_{1,k}$, $F_{2,k}$) of each of the beams to be controlled; and

- a photodetector (PD) that receives all of the beams output by the multichannel modulator device (MOD),

**characterized in that** it further includes a device (GEN) for generating N dual-frequency beams ($F_k$), where N > 1, from the first dual-frequency optical beam ($F_0$), each of the N beams having two components ($F_{1,k}$, $F_{2,k}$) with a frequency shift $F_k$ equal to a frequency component of the signal to be generated, said N beams being sent into independent channels of the multichannel modulator device, the amplitude and the relative phase shift between the components ($F_{1,k}$, $F_{2,k}$) of each of the beams being controlled according to the laws governing the phase and the amplitude of the signal (s(t)) to be generated.

2. Generator according to Claim 1, **characterized in that** said frequency shift $f_k$ is a multiple of a given low frequency $f_D$.

3. Generator according to Claim 2, **characterized in that** said low frequency $f_D$ is of the order of kilohertz.

4. Generator according to either of Claims 2 and 3, **characterized in that** the device (GEN) for generating the N dual-frequency beams comprises:

- splitter means ($S_1$), for splitting the two components ($F_{1,0}$, $F_{2,0}$) of the first dual-frequency beam ($F_0$);
- a module (DHRF) for generating, from an input beam corresponding to said second component ($F_{2,0}$) of angular frequency $\omega+2\pi f_0$, N parallel optical beams ($F_{2,k}$) of angular frequencies $\omega+2\pi(f_0+kf_D)$ where k is an integer between 0 and N-1 and $f_D$ is a given low frequency; and
- combiner means ($S_2$), for combining the first component ($F_{1,0}$) of angular frequency $\omega$ with said N beams ($F_{2,k}$) of angular frequencies $\omega+2\pi(f_0+kf_D)$ in order to deliver said N dual-frequency beams.

5. Generator according to Claim 4, **characterized in that** said generating device (DHRF) comprises two parallel plates ($LP_1$, $LP_2$) separated by a given distance (d), namely a completely reflective first plate ($LP_1$) and a semi-reflective second plate ($LP_2$), between which said input beam ($F_{2,0}$) undergoes multiple reflections, and vibrator means for making said first plate ($LP_1$) vibrate at a vibration frequency enabling a Doppler shift equal to said low frequency $f_D$ to be generated so as to generate, through the semi-reflective second plate ($LP_2$), said N parallel beams of angular frequencies $\omega+2\pi(f_0+kf_D)$.

6. Generator according to Claim 5, **characterized in that** the vibrator means comprise a piezoelectric block (PZT) fixed to said first plate ($LP_1$).

7. Generator according to one of Claims 4 to 6,
**characterized in that** since the first dual-frequency optical beam ($F_0$) has two polarizations, namely the two crossed polarization components ($F_{1,0}$, $F_{2,0}$), the splitter means ($S_1$) and combiner means ($S_2$) are formed from polarization splitter devices.

8. Generator according to either of Claims 2 and 3, **characterized in that** since the first dual-frequency optical beam ($F_0$) has two polarizations, namely the two crossed polarization components, the device for generating the N dual-frequency beams comprises an element formed from an electrooptic material (EO) between two parallel fixed plates ($LP_1$, $LP_2$) spaced apart by a given distance (d), namely a reflective first plate ($LP_1$) and a semi-reflective second plate ($LP_2$), between which said dual-polarized dual-frequency beam undergoes multiple reflections and applicator means (ELC) for applying an electric field between the two plates, the electrooptic material being designed to introduce, at each reflection, a phase shift on just the component ($F_{2,0}$) of angular frequency $\omega+2\pi f_0$, so as to generate, through the semi-reflective second plate ($LP_2$), said N dual-frequency beams ($F_k$).

9. Generator according to Claim 8, **characterized in that** said electrooptic material is a lithium niobate crystal, the axes of which are oriented in such a way that the refractive index of the crystal is modified only along the direction corresponding to the polarization of said component ($F_{2,0}$) of angular frequency $\omega+2\pi f_0$.

10. Generator according to either of Claims 8 and 9, **characterized in that** the device (GEN) for generating the N dual-frequency beams ($F_k$) comprises a stack of elements ($E_1$, $E_2$, $E_3$, $E_4$) each formed from an electrooptic material (EO) and from two plates ($LP_1$, $LP_2$), each of the elements being electrically supplied independently so as to produce continuous multiples of said low frequency $f_D$.

11. Generator according to one of the preceding claims, **characterized in that,** since said N dual-frequency beams have two polarizations, namely crossed linear polarizations, the multichannel optoelectronic modulator (MOD) comprises a first spatial light modulator (SLM$_1$) operating in elastically controlled birefringence mode, which receives said dual-frequency beams ($F_k$) on independent channels so as to control the relative phase shift between the components of each of said beams, a polarizer (P), which orients the polarizations of the two components, and a second spatial light amplitude modulator (SLM$_2$), which receives the polarized dual-frequency beams on independent channels so as to control the amplitude of each of said beams.

## Patentansprüche

1. Generator eines elektrischen Signals (s(t)) mit mehreren Frequenzkomponenten $f_k$, mit einer gegebenen zentralen Frequenz $f_0$, umfassend

    - einen Generator (L) eines ersten optischen Bifrequenzbündels ($F_0$) mit einer ersten optischen Komponente ($F_{1,0}$) mit der Frequenz $\omega$ und einer zweiten optischen Komponente ($F_{2,0}$) mit der Frequenz $\omega+2\pi f_0$, die einen Frequenzunterschied zur ersten Komponente gleich der zentralen Frequenz $f_0$ aufweist,
    - einen optoelektronischen Phasen- und Amplituden-Modulator (MOD) mit mehreren Kanälen, der dazu bestimmt ist, auf jedem Kanal ein optisches Bifrequenzbündel ($F_k$) zu empfangen, und der die Kontrolle der Amplitude und der relativen Phasenverschiebung zwischen den Komponenten ($F_{1,k}$, $F_{2,k}$) jedes der Strahlenbündel ermöglicht,
    - einen Photodetektor (PD), der die Gesamtheit der von der Mehrkanalmodulationsvorrichtung (MOD) ausgehenden Strahlenbündel empfängt,

    **dadurch gekennzeichnet, dass** er ferner eine Vorrichtung (GEN) zur Erzeugung von N Bifrequenzbündeln ($F_k$) N>1 aus dem ersten optischen Bifrequenzbündel ($F_0$) umfasst, die jeweils zwei Komponenten ($F_{1,k}$, $F_{2,k}$) mit einem Frequenzunterschied $f_k$ gleich einer Frequenzkomponente des zu erzeugenden Signals aufweisen, wobei die N Strahlenbündel zu von der Mehrkanalmodulationsvorrichtung unabhängigen Kanälen gesandt werden, wobei die Amplitude und die relative Phasenverschiebung zwischen den Komponenten ($F_{1,k}$, $F_{2,k}$) jedes der Strahlenbündel in Abhängigkeit von den Phasen- und Amplitudengesetzen des zu erzeugenden Signals (s(t)) kontrolliert werden.

2. Generator nach Anspruch 1, **dadurch gekennzeichnet, dass** der Frequenzunterschied $f_k$ ein Vielfaches einer gegebenen Niederfrequenz $f_D$ ist.

3. Generator nach Anspruch 2, **dadurch gekennzeichnet, dass** die Niederfrequenz $f_D$ ungefähr ein Kilohertz beträgt.

4. Generator nach einem der Ansprüche 2 oder 3,
   **dadurch gekennzeichnet, dass** die Vorrichtung (GEN) zur Erzeugung der N Bifrequenzbündel umfasst:

    - Mittel (S$_1$) zum Trennen der beiden Komponenten ($F_{1,0}$, $F_{2,0}$) des ersten Bifrequenzbündels ($F_0$),
    - ein Mittel (DHRF), um aus einem Eingangsstrahl entsprechend der zweiten Komponente ($F_{2,0}$) mit der Frequenz $\omega+2\pi f_0$ N parallele optische Strahlenbündel ($F_{2,k}$) mit den Frequenzen $\omega+2\pi(f_0+k f_D)$ zu erzeugen, wobei k eine ganze Zahl zwischen 0 und N-1 und $f_D$ eine gegebene Niederfrequenz ist,
    - Mittel (S$_2$), um die erste Komponente ($F_{1,0}$) mit der Frequenz $\omega$ mit den N Strahlenbündeln ($F_{2,k}$) mit den Frequenzen $\omega+2\pi(f_0+k f_D)$ zu kombinieren, um die N Bifrequenzbündel zu liefern.

5. Generator nach Anspruch 4, **dadurch gekennzeichnet, dass** die Erzeugungsvorrichtung (DHRF) zwei parallele Lamellen (LP$_1$, LP$_2$) umfasst, die um einen gegebenen Abstand (d) getrennt sind, eine erste zur Gänze reflektierende Lamelle (LP$_1$) und eine zweite halb reflektierende Lamelle (LP$_2$), zwischen denen der Eingangsstrahl ($F_{2,0}$) mehreren Reflexionen ausgesetzt ist, und Mittel, um die erste Lamelle (LP$_1$) mit einer Vibrationsfrequenz in Vibrationsbewegung zu versetzen, umfasst, die es ermöglicht, einen Doppler-Versatz gleich der Niederfrequenz $f_D$ zu erzeugen, um über die zweite halb reflektierende Lamelle (LP$_2$) die N parallelen Strahlenbündel mit Frequenzen $\omega+2\pi(f_0+k f_D)$ zu erzeugen.

6. Generator nach Anspruch 5, **dadurch gekennzeichnet, dass** die Mittel zum Versetzen in Vibrationsbewegung einen piezoelektrischen Keil (PZT) umfassen, der auf der ersten Lamelle (LP$_1$) befestigt ist.

7. Generator nach einem der Ansprüche 4 bis 6, **dadurch gekennzeichnet, dass**, da das erste optische Bifrequenzbündel ($F_0$) bipolarisiert ist, die beiden Komponenten ($F_{1,0}$, $F_{2,0}$) mit Kreuzpolarisationen sind, die Trennmittel ($S_1$) und Kombinationsmittel ($S_2$) von Polarisationstrennvorrichtungen gebildet sind.

8. Generator nach einem der Ansprüche 2 oder 3, **dadurch gekennzeichnet, dass**, da das erste optische Bifrequenzbündel ($F_0$) bipolarisiert ist, die beiden Komponenten mit Kreuzpolarisationen sind, die Vorrichtung zur Erzeugung der N Bifrequenzbündel ein Element umfasst, das von einem elektrooptischen Material (EO) gebildet ist, das zwischen zwei festen, parallelen, um einen gegebenen Abstand (d) beabstandete Lamellen ($LP_1$, $LP_2$), einer ersten reflektierenden Lamelle ($LP_1$) und einer zweiten halb reflektierenden Lamelle ($LP_2$), zwischen denen das bipolarisierte Bifrequenzbündel mehreren Reflexionen ausgesetzt ist, angeordnet ist, und Mittel (ELC) zum Anlegen eines elektrischen Feldes zwischen den beiden Lamellen umfasst, wobei das elektrooptische Material derart angeordnet ist, dass es bei jeder Reflexion die Einleitung einer Phasenverschiebung nur auf der Komponente ($F_{2,0}$) mit der Frequenz $\omega+2\pi f_0$ ermöglicht, um über die zweite halb reflektierende Lamelle ($LP_2$) die N Bifrequenzbündel ($F_k$) zu erzeugen.

9. Generator nach Anspruch 8, **dadurch gekennzeichnet, dass** das elektrooptische Material ein Lithium-Niobat-Kristall ist, dessen Achsen derart ausgerichtet sind, dass der Brechungsindex des Kristalls nur in die Richtung verändert wird, die der Polarisation der Komponente ($F_{2,0}$) mit der Frequenz $\omega+2\pi f_0$ entspricht.

10. Generator nach einem der Ansprüche 8 oder 9, **dadurch gekennzeichnet, dass** die Vorrichtung (GEN) zur Erzeugung der N Bifrequenzbündel ($F_k$) eine Stapelung von Elementen ($E_1$, $E_2$, $E_3$, $E_4$) umfasst, die jeweils von einem elektrooptischen Material (EO) und zwei Lamellen ($LP_1$, $LP_2$) gebildet sind, wobei jedes der Elemente elektrisch unabhängig versorgt wird, um kontinuierliche Vielfache der Niederfrequenz $f_D$ zu erzeugen.

11. Generator nach einem der vorhergehenden Ansprüche, **dadurch gekennzeichnet, dass**, da die N Bifrequenzbündel bipolarisiert mit linearen Kreuzpolarisationen sind, der optoelektronische Mehrkanalmodulator (MOD) einen ersten Raummodulator ($SLM_1$), der in elektrisch kontrollierter Bilichtbrechung funktioniert, auf unabhängigen Kanälen die Bifrequenzbündel ($F_k$) empfängt, um die relative Phasenverschiebung zwischen den Komponenten jedes der Strahlenbündel zu kontrollieren, wobei ein Polarisator (P) die Polarisationen der beiden Komponenten ausrichtet, und einen zweiten räumlichen Amplitudenmodulator ($SLM_2$) umfasst, der auf unabhängigen Kanälen die polarisierten Bifrequenzbündel empfängt, um die Amplitude jedes der Strahlenbündel zu kontrollieren.

FIG.1

EP 1 570 313 B1

FIG.2

FIG.3A

FIG.3B

FIG.4

FIG.5

**EP 1 570 313 B1**

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2772938

**Littérature non-brevet citée dans la description**

- **TONDA-GOLDSTEIN S et al.** OPTOELECTRONIC ARBITRARY-WAVEFORM GENERATOR FOR RADAR APPLICATIONS. *PROCEEDINGS OF THE SPIE, SPIE,* 31 Juillet 2001, vol. 4457, 179-187

- **M.ALOUINI et al.** Offset Phase Locking of Er:Yb:Glass Laser Eigenstates for RF Photonics Applications. *IEEE Photonics Technology letters,* Avril 2001, vol. 13 (4

13